# EUROPÄISCHE PATENTSCHRIFT

(11) **EP 3 197 705 B1**
(45) Veröffentlichungstag und Bekanntmachung des Hinweises auf die Patenterteilung: **05.04.2023**
(21) Anmeldenummer: 15762538.5
(22) Anmeldetag: 03.09.2015
(51) Int. Cl.: G01S 13/86, G01S 13/931, G01S 13/88, G01S 15/931, B60L 53/16, B60L 53/36, B60L 53/60, B60L 3/00

(54) **IN ABSTANDSSENSOREN INTEGRIERTE LOKALISIERUNG VON LADESPULEN**
LOCALIZATION OF CHARGING COILS, WHICH IS INTEGRATED IN DISTANCE SENSORS
LOCALISATION DE BOBINES DE CHARGE INTÉGRÉE DANS DES CAPTEURS DE DISTANCE

(30) Priorität: 25.09.2014 DE 102014219384
(43) Veröffentlichungstag der Anmeldung: 02.08.2017
(73) Patentinhaber: Continental Automotive Technologies GmbH, 30165 Hannover (DE)
(72) Erfinder: RINK, Klaus, 63517 Rodenbach (DE)
(74) Vertreter: Continental Corporation
(86) Internationale Anmeldenummer: PCT/EP2015/070151
(87) Internationale Veröffentlichungsnummer: WO 2016/045933

(56) Entgegenhaltungen:
- WO-A1-2010/040962
- WO-A2-2014/023595
- DE-A1-102010 063 665
- US-A1- 2014 132 208

## Beschreibung

Die Erfindung betrifft eine Sensoranordnung aus mehreren, in einem Fahrzeug an zueinander beabstandeten Orten angeordneten Abstandssensoren, einem Verfahren zum Positionieren eines Fahrzeuges, eine Steuervorrichtung und ein Fahrzeug.

Aus der WO 2010 / 037 810 A1 ist eine elektronische Vorrichtung in Form eines Sensors zum Ausgeben eines elektrischen Signals bekannt, dass von einer physikalischen Größe abhängig ist, die über ein physikalisches Feld basierend auf einem Messaufnehmer erfasst wird.

Die Druckschrift WO 2014/023595 A2 offenbart ein Fahrzeug mit mehreren Empfängern, die in der Lage sind ein Magnetfeldvektor zu detektieren. Zum Erzeugen der Magnetfeldvektoren werden entsprechende Antennen bzw. Sender an der Primärspule des Ladegerätes angeordnet, die ein definiertes elektromagnetisches Feld erzeugt. Auf diese Weise kann eine genaue Positionierung des Fahrzeugs zur Primärspule des Ladegerätes ermittelt werden.

Die Druckschrift US 2014 / 132208 A1 betrifft ein System und ein Verfahren zum Bereitstellen einer Ausrichtung zwischen einem Quellenresonator und einem Einfangresonator. Das System und das Verfahren können verwendet werden, um ein Fahrzeug mit einem Einfangresonator auf den Quellenresonator eines drahtlosen induktiven Batterieladesystems für ein Elektrofahrzeug auszurichten.

Hiervon ausgehend ist es Aufgabe der Erfindung, den bekannten Sensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Sensoranordnung aus mehreren, in einem Fahrzeug an zueinander beabstandeten Orten angeordneten und zum Ausgeben eines von einem Abstand zu einem vom Fahrzeug beabstandeten Hindernis abhängigen ersten Messsignals ausgebildeten Abstandssensoren, jeweils ein Abstandssensor umfassend:
- eine Sensorschaltung mit einem Abstandsmessaufnehmer zum Erzeugen des ersten Abstandsmesssignals basierend auf dem Abstand, wobei
- eine Magnetfeldsonde zum Ausgeben eines von einem zu erfassenden Magnetfeld abhängigen zweiten Messsignals in dem Abstandssensor verbaut ist und wobei die Sensorschaltung und die Magnetfeldsonde gemeinsam in einem Gehäuse aufgenommen sind.

Der angegebenen Sensoranordnung liegt die Überlegung zugrunde, dass Elektrofahrzeuge über Sendespulen mit elektrischer Energie aufgeladen werden könnten, die mit einem Magnetfeld in einer Empfangsspule am Fahrzeug eine Ladespannung induzieren, mit der dann wiederrum ein elektrischer Energiespeicher im Elektrofahrzeug aufgeladen werden kann. Hierzu müssen das Fahrzeug und insbesondere die Empfangsspule am Fahrzeug exakt über der Sendespule positioniert werden, um einen maximalen Wirkungsgrad bei der induktiven Übertragung der elektrischen Energie zu erreichen.

Zur exakten Positionierung könnten über das Fahrzeug örtlich verteilte Magnetfeldsonden verwendet werden, die die Höhe des Magnetfeldes der Sendespule an den einzelnen Orten im Fahrzeug erfassen. Basierend auf diesen Höhen des Magnetfeldes kann dann beispielsweise durch Triangulierung die relative Lage der Sendespule und der der Empfangsspule zueinander bestimmt und das Fahrzeug durch Bewegen entsprechend positionsgeregelt werden, dass die Empfangsspule exakt über der Sendespule positioniert wird.

Für eine Triangulierung sind jedoch mindestens drei Magnetfeldsonden notwendig, um die relative Lage zwischen Sendespule und Empfangsspule sinnvoll bestimmen zu können, was wiederrum mit einem entsprechend notwendigen Bauraum verbunden ist.

Wenn das Magnetfeld der Sendespule auch gerichtet erfasst werden kann, könnten zur Lokalisierung der Sendespule relativ zum Fahrzeug auch zwei Magnetfeldsonden ausreichen.

Hier greift die angegebene Sensoranordnung mit der Überlegung an, die Magnetfeldsonde in einen bereits vorhandenen Abstandssensor mit zu integrieren. Auf diese Weise kann die bereits vorhandene Struktur, wie Sensorschaltung, Signalverarbeitungsschaltung, Datenschnittstelle und Gehäuse mitverwendet werden, was zu einem deutlich reduzierten Platzbedarf im Fahrzeug führt.

Als bereits vorhandener Sensor kann im Fahrzeug grundsätzlich jeder beliebige bereits vorhandene Sensor gewählt werden. Vorzugsweise sollten hierbei jedoch bereits vorhandene Sensoren gewählt werden, die in ihrer Struktur mehrfach im Fahrzeug vorliegen, weil sie beispielsweise dieselbe Messgröße an verschiedenen Sensororten im Fahrzeug erfassen müssen. Als derartige bereits vorhandene Sensoren bieten sich beispielsweise Abstandssensoren oder aber auch Raddrehzahlsensoren an.

Erfindungsgemäß sind die Abstandssensoren der Sensoranordnung eingerichtet als Messgröße einen Abstand zu einem vom Fahrzeug beabstandeten Hindernis zu erfassen. Bereits vorhandene Abstandssensoren im Fahrzeug haben gegenüber Raddrehzahlsensoren den Vorteil, dass sie ohne Abschirmblech wirksam betrieben werden können. Das Abschirmblech hat im Rahmen des angegebenen Sensors den Nachteil, dass es auch das Magnetfeld der Sendespule abschirmt und damit die Bestimmung der relativen Lage zwischen Sendespule und Empfangsspule zumindest unnötig erschwert.

Gemäß einem weiteren Aspekt betrifft die Erfindung ein Verfahren zum Positionieren eines Fahrzeuges, in dem eine Sensoranordnung entsprechend einer der beanspruchten Ausführungsformen angeordnet ist, die Sensoranordnung umfassend wenigstens zwei vorzugsweise wenigstens drei der angegebenen Abstandsensoren an zueinander beabstandeten Sensororten, über einer Sendespule zum Induzieren einer Ladespannung in einer Empfangsspule des Fahrzeuges zum Laden eines elektrischen Energiespeichers mit einem Magnetfeld, die Schritte:
- Erfassen für jeden Sensorort eine Höhe des Magnetfeldes mit dem jeweiligen an dem Sensorort angeordneten Sensor,
- Bestimmen einer relativen Lage der Sendespule zum Fahrzeug basierend auf den erfassten Höhen des Magnetfeldes an den Sensororten, und
- Bewegen des Fahrzeuges basierend auf der bestimmten relativen Lage, bis das Fahrzeug mit der Sendespule über der Empfangsspule positioniert ist.

Mit dem angegebenen Verfahren lässt sich das Fahrzeug exakt über der Sendespule ausrichten, so dass das der Energiespeicher des Fahrzeuges mit einem hohen Wirkungsgrad geladen werden kann. In einer besonderen Weiterbildung des angegebenen Verfahrens wird die relative Lage der Sendespule zum Fahrzeug basierend auf einer Triangulierung der erfassten Höhen des Magnetfeldes an den Sensororten bestimmt.

In einer anderen Weiterbildung des angegebenen Verfahrens wird zum Bewegen des Fahrzeuges über die Sendespule das Fahrzeug auf einem basierend auf der relativen Lage bestimmten Weg bewegt, wobei das Fahrzeug bei der Bewegung auf diesem Weg mit dem ersten Messsignal aus der Sensorschaltung gegenüber einem Zusammenstoß mit Hindernissen in der Umgebung überwacht wird. Auf diese Weise können beide Messaufnehmer des zuvor genannten Sensors bei der Durchführung des angegebenen Verfahrens sinnvoll eingesetzt werden.

In einer weiteren Weiterbildung umfasst das angegebene Verfahren den Schritt Positionieren des Fahrzeuges in einem Bereich um die Sendespule, bis das Magnetfeld mit den Sensoren erfassbar ist, basierend auf einem GNSS genannten globalen Navigationssatellitensystem. Auf diese Weise kann zunächst eine grobe Positionierung des Fahrzeuges in der Nähe der Sendespule stattfinden, wobei dann mittels Handshake das angegebene Verfahren zur präzisen Positionierung des Fahrzeuges über der Sendespule zum Einsatz kommt. Das GNSS kann dabei direkt oder aber auch im Rahmen eines Fusionssensors verwendet werden.

Gemäß einem weiteren Aspekt der Erfindung ist eine Steuervorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug:
- ein auf Rädern getragenes Chassis,
- eine der angegebenen Sensoranordnungen mit wenigstens drei Abstandssensoren die an zueinander beabstandeten Sensororten angeordnet sind,
   ein elektrischer Speicher (14),
   eine Empfangsspule (16) zum Laden des elektrischen Speichers (14) mit einem Magnetfeld (18), und
- eine der angegebenen Steuervorrichtungen zum Positionieren des Fahrzeuges.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines in eine Parklücke mit einer Sendespule einparkenden Fahrzeuges,
Fig. 2 eine Prinzipdarstellung des Fahrzeuges der Fig. 1,
Fig. 3 eine Prinzipdarstellung eines Sensors in dem Fahrzeug der Fig. 2, und
Fig. 4 eine Prinzipdarstellung eines Sensors in dem Fahrzeug der Fig. 2 zeigen.

In den Figuren werden gleiche technische Elemente mit gleichen Bezugszeichen versehen und nur einmal beschrieben.

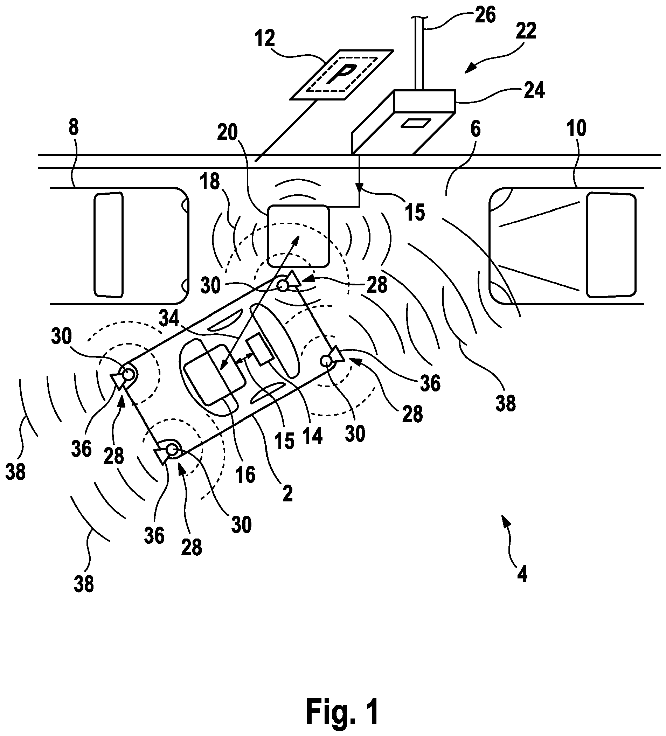

Es wird auf Fig. 1 Bezug genommen, die eine Prinzipdarstellung eines Fahrzeuges 2 zeigt, das auf einer Straße 4 in eine Parklücke 6 zwischen zwei weiteren Fahrzeugen 8, 10 einparken soll. Die Parkmöglichkeit ist dabei durch ein entsprechendes Verkehrszeichen 12 angedeutet.

Das Fahrzeug 2 ist nachstehend als Elektrofahrzeug ausgeführt und wird daher auch so bezeichnet. Dabei wird das Elektrofahrzeug 2 über einen elektrischen Energiespeicher 14 in einer noch zu beschreibenden Weise unter anderem zum Antrieb mit elektrischer Energie 15 versorgt. Ferner ist an dem Elektrofahrzeug 2 eine Empfangsspule 16 vorhanden, über die das Elektrofahrzeug 2 ein Magnetfeld 18 zum Laden des elektrischen Energiespeichers 14 empfangen und per Induktion in die elektrische Energie 15 wandeln kann.

Das Magnetfeld 18 wird im Rahmen der vorliegenden Ausführung von einer Sendespule 20 ausgestrahlt, die als Teil einer Ladestation 22 in der Parklücke 6 vorhanden ist. Die Ladestation 22 umfasst dabei ferner ein Bedienterminal 24, an dem ein Benutzer Eingaben tätigen kann, um beispielsweise für die elektrische Energieversorgung zu bezahlen. Das Bedienterminal 24 legt dabei die elektrische Energie 15, mit der der elektrische Energiespeicher 14 zu laden ist, an die Sendespule 20 an, die dann in an sich bekannter Weise das Magnetfeld 18 erregt und so die elektrische Energie per Induktion über die Empfangsspule 16 an den elektrischen Energiespeicher 14 im Fahrzeug 2 überträgt. Dabei kann die elektrische Energie 15 beispielsweise aus einem elektrischen Energieversorgungsnetz 26 entnommen werden, an das das Bedienterminal 24 angeschlossen sein kann.

Für eine Übertragung der elektrischen Energie 15 über die Sendespule 20 und die Empfangsspule 16 mit einem möglichst hohen Wirkungsgrad sollte die Empfangsspule 16 möglichst genau über der Sendespule 20 positioniert werden.

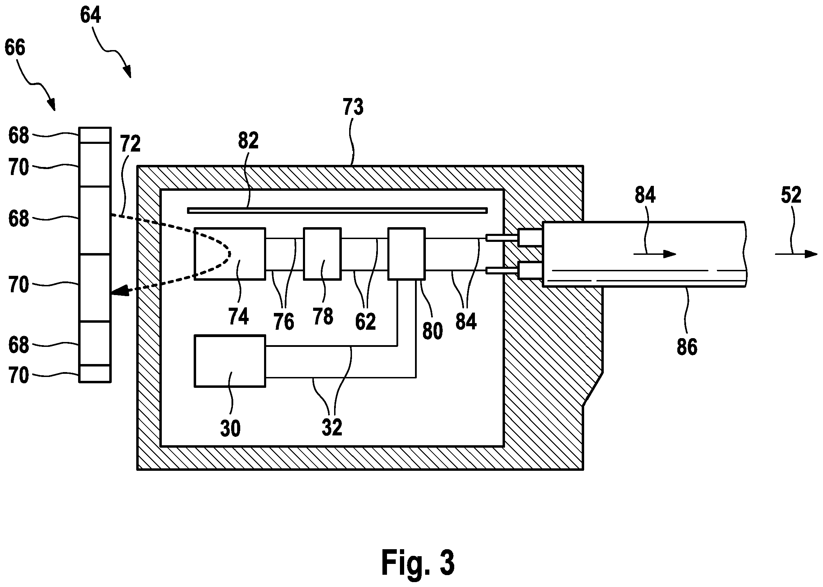

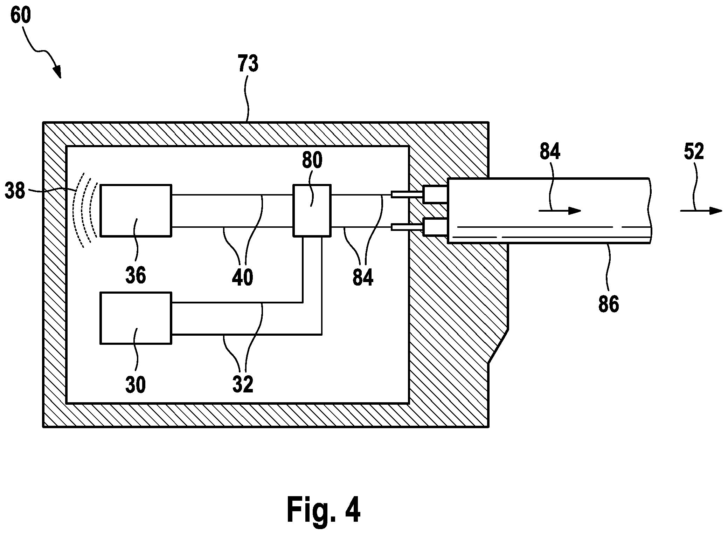

Hierfür sind am Fahrzeug 2 im Rahmen der vorliegenden Ausführung an vier verschiedenen und zueinander beabstandeten Sensororten 28 Magnetfeldsonden 30 vorhanden. Die Magnetfeldsonden 30 erfassen das Magnetfeld 18 der Sendespule 20 und geben ein in Fig. 3 und 4 angedeutetes Magnetfeldmesssignal 32 aus, dessen Höhe von der Höhe des Magnetfeldes 18 am jeweiligen Sensorort 28 abhängig ist. Da das Magnetfeld 18 den jeweiligen Sensororten 28 abstandsabhängig zur Sendespule 20 gedämpft wird, ist die Höhe des Magnetfeldes 18 am Sensorort 28 und damit auch die Höhe des entsprechenden Magnetfeldmesssignals 32 vom Abstand des Sensorortes 28 zur Sendespule 20 abhängig. Liegt damit das Magnetfeldmesssignal 32 an mindestens drei verschiedenen Magnetfeldsonden 30 vor, dann lässt sich die relative Lage 34 des Fahrzeuges 2 zur Sendespule 20 und damit die relative Lage 34 der Empfangsspule 16 zur Sendespule 20 bestimmen.

Über geeignete Stelleingriffe am Fahrzeug, wie beispielsweise Antrieb und Lenkung, kann dann diese relative Lage 34 möglichst zu Null gebracht und damit die Empfangsspule 16 exakt über der Sendespule 20 positioniert werden.

An dem Fahrzeug 2 sind ferner noch Abstandsmessaufnehmer 36 vorhanden, die bspw. mittels Radarstrahlen 38 vom Abstand zu Hindernissen, wie beispielsweise die beiden anderen Fahrzeuge 8, 10 abhängige und in Fig. 4 angedeutete Abstandsmesssignale 40 ausgeben. Alternativ sind auch Abstandsmessaufnehmer 36 denkbar, die mit Ultraschall den Abstand erfassen. Basierend auf den Abstandsmesssignalen 40 kann dann eine Kollision mit den Hindernissen 8, 10 beispielsweise durch Bremseingriffe am Fahrzeug 2 verhindert werden. Von den Abstandsmessaufnehmern 36 sind in Fig. 1 der Übersichtlichkeit halber nicht alle mit einem Bezugszeichen versehen.

Die Magnetfeldsonden 30 müssen in dem Fahrzeug an den einzelnen Sensororten 28 verbaut werden und nehmen hierbei entsprechend Bauraum in Anspruch. Um den notwendigen Bauraum zu reduzieren, sollen die Magnetfeldsonden 30 möglichst in bereits vorhandene Sensoren am Fahrzeug 2 integriert werden.

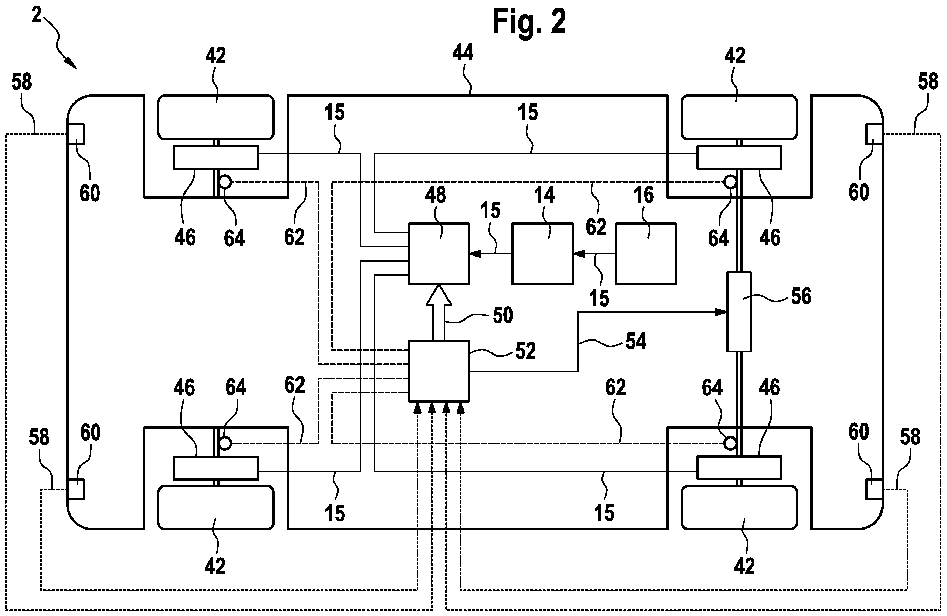

Um das zu erläutern, wird zunächst anhand von Fig. 2 näher auf den Aufbau des Fahrzeuges 2 eingegangen.

Das Fahrzeug 2 besitzt ein auf vier Rädern 42 getragenes Chassis 44, wobei jedes Rad 42 individuell über einen Elektromotor 46 antreibbar ist. Zum Antrieb ist eine Motorsteuerung 48 vorgesehen, die basierend auf einer Beschleunigungsanforderung 50 die Elektromotoren 46 mit der elektrischen Energie 15 aus dem elektrischen Energiespeicher 14 zum Vortrieb des Fahrzeuges 2 versorgen kann.

Dabei kann jeder Elektromotor 46 individuell mit elektrischer Energie 15 versorgt werden, um beispielsweise die Fahrdynamik des Fahrzeuges 2 mit einer an sich bekannten Fahrdynamik zu regeln.

Die Beschleunigungsanforderung 50 kann von verschiedenen Einheiten im Fahrzeug 2, wie beispielsweise einem nicht weiter dargestellten Gaspedal kommen. Im Rahmen der vorliegenden Ausführung gibt die Beschleunigungsanforderung 50 ein Einparkassistent 52 zum automatischen Einparken des Fahrzeuges 2 in die Parklücke 6 aus. Neben der Beschleunigungsanforderung 50 gibt der Einparkassistent 52 ferner noch einen Lenkwinkel 54 aus, um damit eine Lenkung 56 des Fahrzeuges 2 anzusteuern. Ferner kann der Einparkassistent 52 noch mit Bremssteuersignalen in eine nicht weiter gezeigte Bremse des Fahrzeuges 2 eingreifen.

Bei dem Einparkassistent 52 handelt es sich grundsätzlich um einen oder mehrere Regler, der/die die Beschleunigungsanforderung 50, den Lenkwinkel 54 und die zuvor genannten Bremssteuersignale als Stellsignale basierend auf einem Soll-/Istwertvergleich, wie er beispielsweise in der DE 198 09 416 A1 beschrieben ist, ausgeben kann/können.

Hierzu sind Sensorsignale notwendig. Die Sensorsignale können beispielsweise Abstandssensorsignale 58 aus Abstandssensoren 60 sein, die die Abstandssensorsignale 58 in Abhängigkeit der Abstandsmesssignale 40 aus den Abstandsmessaufnehmern 36 erzeugen. Zusätzlich können die Sensorsignale auch Raddrehzahlsignale 62 aus Raddrehzahlsensoren 64 sein. Wie in Figur 2 dargestellt, ist es vorteilhaft die Magnetsonde 30 an den Eckbereichen des Fahrzeugs 2 anzuordnen. Hierzu eignen sich sowohl die bestimmte Abstandsensoren 60 als auch die Raddrehzahlsensoren 64 in besonders vorteilhafter Weise als Aufnehmer für die Magnetsonde 30.

Die Magnetfeldsonden 30 können sowohl in den Abstandssensoren 60 als auch in den Raddrehzahlsensoren 64 verbaut werden. Der Vorteil in beiden Fällen ist, dass der resultierende Gesamtsensor stets in gleicher Weise aufgebaut werden kann, weil diese Sensortypen an verschiedenen Sensororten 28 im Fahrzeug 2 die gleiche Messgröße erfassen.

Gemäß der Fig. 3 können die Magnetfeldsonden 30 in den Raddrehzahlsensoren 64 verbaut werden, was jedoch aus nachstehend erläuterten Gründen nicht bevorzugt ist.

Jeder Raddrehzahlsensor 64 erfasst die Drehzahl eines Rades 42 basierend auf einem sich mit der Drehzahl des Rades 42 drehenden Encoderrad 66, das in Umfangsrichtung der Drehung mit magnetischen Nordpolen 68 und magnetischen Südpolen 70 encodiert ist und so ein entsprechendes magnetisches Geberfeld 72 erregt.

Hierzu umfasst jeder Raddrehzahlsensor 64 ein Gehäuse 73, in dem ein magnetfeldempfindlicher Drehzahlmessaufnehmer 74 aufgenommen ist, der das Geberfeld 72 erfasst und basierend darauf ein von der Drehzahl abhängiges Drehzahlgebersignal 76 ausgibt. Das Drehzahlgebersignal 76 wird in einer Signalverarbeitungsschaltung 34 ausgewertet, wobei das Raddrehzahlsignal 62 erzeugt und an eine Schnittstelle 80 ausgegeben wird. Ein Abschirmblech 82 in dem Gehäuse 73 schirmt die elektronischen Komponenten des Raddrehzahlsensors 64 von elektromagnetischen Einflüssen von außen ab.

An die Schnittstelle 80 kann die Magnetfeldsonde 30 direkt oder über die Signalverarbeitungsschaltung 78 indirekt angeschlossen werden, wobei die Schnittstelle 80 aus dem Raddrehzahlsignal 62 und dem Magnetfeldmesssignal 32 ein gemeinsames Datenübertragungssignal 84 erzeugt und über eine Zweidrahtleitung 86 an den Parkassistenten 52 überträgt.

Das Abschirmblech 82 schirmt in diesem Ausführungsbeispiel jedoch nicht nur elektromagnetische Einflüsse sondern auch das Magnetfeld 18 ab. Deshalb ist die Verwendung der Magnetfeldsonden 30 in den Drehzahlsensoren 64 wie bereits angedeutet, nicht bevorzugt.

Die in Fig. 4 gezeigten Abstandssensoren 60 besitzen prinzipbedingt kein Abschirmblech 82, weshalb hier das Magnetfeld auch nicht abgeschirmt werden kann. Daher sollten die Magnetfeldsonden 30 mit dem in Fig. 3 erläuterten Prinzip in den Abstandssensoren 60 verbaut werden.

Es ist besonders vorteilhaft die Magnetsonden 30 in Abstandsensoren zu verbauen. Auf diese Weise ist zum einen kein gesonderter Sensor zum Ertasten der Position der Ladestation 22 notwendig. Auf diese Weise kann Bauraum, zusätzliche elektrische Leitungen sowie der Montageaufwand eingespart werden. Darüber hinaus bieten Abstandsensoren einen besonders großen Vorteil, weil diese in den Stoßstangen des Fahrzeugs verbaut sind, die üblicherweise aus Kunststoff bestehen und damit die Wirksamkeit der Magnetsonde 30 nicht negativ beeinflussen. Ebenso ist es aber auch denkbar die Magnetsonden 30 in Drucksensoren einzubauen oder zu integrieren. Solche Drucksensoren befinden sich ebenfalls in den Stoßstangen eines Fahrzeugs und dienen den Kontakt der Stoßstange mit einer Person zu ertasten. Zweckmäßigerweise werden die Magnetsonden in solche Drucksensoren integriert. Es ist jedoch auch denkbar die Magnetsonden 30 separat in einen Schaumstoff einzubetten, in dem auch der Drucksensor eingebettet ist. Ein derartiger Drucksensor¹ wurde von der Anmelderin entwickelt und vertrieben.
¹http://www.continental-corporation.com/www/presseportal_com_de/themen/pr essemitteilungen/3_automotive_group/chassis_safety/press_releases/pr_2010_10_05_fussga engerschutz_sensoren_de.html

Im Allgemeinen sollte in der Umgebung der Magnetfeldsonden 30 kein Metall sein um die Ausbreitung des Magnetfeldes 18 im Bereich der Magnetfeldsonden 30 nicht zu stören.

## Patentansprüche

1. Sensoranordnung aus mehreren, in einem Fahrzeug (2) an zueinander beabstandeten Orten angeordneten und zum Ausgeben eines von einem Abstand zu einem vom Fahrzeug (2) beabstandeten Hindernis (8, 10) abhängigen ersten Abstandsmesssignals (40, 62) ausgebildeten Abstandssensoren (60, 64), jeweils ein Abstandssensor (60, 64) umfassend:
- eine Sensorschaltung mit einem Abstandsmessaufnehmer (36, 74) zum Erzeugen des ersten Abstandsmesssignals (62, 40) basierend auf dem Abstand,
wobei eine Magnetfeldsonde (30) zum Ausgeben eines von einem zu erfassenden Magnetfeld (18) abhängigen zweiten Messsignals (32) in dem Abstandssensor verbaut ist, **dadurch gekennzeichnet, dass**
die Sensorschaltung und die Magnetfeldsonde (30) gemeinsam in einem Gehäuse (73) aufgenommen sind.

2. Sensoranordnung nach Anspruch 1,
wobei das Gehäuse des Abstandssensors aus nicht magnetischen Materialien besteht, insbesondere metallfrei ist, insbesondere aus einem Kunststoff oder mehreren Kunststoffen besteht.

3. Verfahren zum Positionieren eines Fahrzeuges (2), in dem eine Sensoranordnung nach einem der vorstehenden Ansprüche angeordnet ist, die Sensoranordnung umfassend wenigstens zwei vorzugsweise wenigstens drei Abstandsensoren (60, 64) an zueinander beabstandeten Sensororten (28) , über einer Sendespule (20) zum Induzieren einer Ladespannung in einer Empfangsspule (16) des Fahrzeuges (2) zum Laden eines elektrischen Energiespeichers (14) mit einem Magnetfeld (18), umfassend:
- Erfassen für jeden Sensorort (28) einer Höhe des Magnetfeldes (18) mit dem jeweiligen an dem Sensorort (28) angeordneten Sensor (60, 64),
- Bestimmen einer relativen Lage (34) der Sendespule (20) zum Fahrzeug (2) basierend auf den erfassten Höhen des Magnetfeldes (18) an den Sensororten (28), und
- Bewegen des Fahrzeuges (2) basierend auf der bestimmten relativen Lage (34), bis das Fahrzeug (2) mit der Sendespule (20) über der Empfangsspule (16) positioniert ist.

4. Verfahren nach Anspruch 3,
wobei die relative Lage (34) der Sendespule (20) zum Fahrzeug (2) basierend auf einer Triangulierung der erfassten Höhen des Magnetfeldes (18) an den Sensororten (28) bestimmt wird.

5. Verfahren nach Anspruch 3 oder 4,
wobei zum Bewegen des Fahrzeuges (2) über die Sendespule (20) das Fahrzeug (2) auf einem basierend auf der relativen Lage (34) bestimmten Weg bewegt wird,
wobei das Fahrzeug (2) bei der Bewegung auf diesem Weg mit dem ersten Messsignal (40) aus der Sensorschaltung gegenüber einem Zusammenstoß mit Hindernissen (8, 10) in der Umgebung überwacht wird.

6. Verfahren nach einem der Ansprüche 3 bis 5, umfassend:
- Positionieren des Fahrzeuges (2) in einem Bereich um die Sendespule (20) basierend auf einem GNSS genannten globalen Navigationssatellitensystem, bis das Magnetfeld (18) mit den Sensoren (60, 64) erfassbar ist.

7. Steuervorrichtung (52), die eingerichtet ist, ein Verfahren nach einem der Ansprüche auszuführen 3 bis 6.

8. Fahrzeug (2), umfassend:
- ein auf Rädern (42) getragenes Chassis (44),
- eine Sensoranordnung nach einem der Ansprüche 1 oder 2 mit wenigstens drei Abstandssensoren, die an zueinander beabstandeten Sensororten (28) angeordnet sind,
einen elektrischen Speicher (14),
eine Empfangsspule (16) zum Laden des elektrischen Speichers (14) mit einem Magnetfeld (18), und
- eine Steuervorrichtung (52) nach Anspruch 7 zum Positionieren des Fahrzeuges (2).

9. Fahrzeug (2) nach Anspruch 8,
wobei die Sensoren an den Eckbereichen des Fahrzeugs (2), insbesondere in den Eckbereichen der Stoßstange des Fahrzeugs (2), angeordnet sind.

## Claims

1. Sensor arrangement comprising multiple distance sensors (60, 64), which are arranged in a vehicle (2) at spaced-apart locations and are designed to output a first distance measurement signal (40, 62) that is dependent on a distance from an obstacle (8, 10) that is spaced apart from the vehicle (2), each distance sensor (60, 64) comprising:
- a sensor circuit having a distance measurement sensor (36, 74) for generating the first distance measurement signal (62, 40) on the basis of the distance, wherein a magnetic field probe (30) is installed in the distance sensor to output a second measurement signal (32) that is dependent on a magnetic field (18) to be detected, **characterized in that**
the sensor circuit and the magnetic field probe (30) are accommodated together in a housing (73).

2. Sensor arrangement according to Claim 1,
wherein the housing of the distance sensor consists of non-magnetic materials, in particular is metal-free, in particular consists of a plastic or multiple plastics.

3. Method for positioning a vehicle (2), in which a sensor arrangement according to either of the preceding claims is arranged, the sensor arrangement comprising at least two, preferably at least three, distance sensors (60, 64) at spaced-apart sensor locations (28), by way of a transmitting coil (20) for inducing a charging voltage in a receiving coil (16) of the vehicle (2) in order to charge an electrical energy store (14) using a magnetic field (18), comprising:
- detecting a level of the magnetic field (18) for each sensor location (28) using the respective sensor (60, 64) arranged at the sensor location (28),
- determining a relative bearing (34) of the transmitting coil (20) in relation to the vehicle (2) on the basis of the detected levels of the magnetic field (18) at the sensor locations (28), and
- moving the vehicle (2) on the basis of the determined relative bearing (34) until the vehicle (2) has the transmitting coil (20) positioned over the receiving coil (16).

4. Method according to Claim 3,
wherein the relative bearing (34) of the transmitting coil (20) in relation to the vehicle (2) is determined on the basis of triangulation of the detected levels of the magnetic field (18) at the sensor locations (28).

5. Method according to Claim 3 or 4,
wherein to move the vehicle (2) over the transmitting coil (20) the vehicle (2) is moved on a path determined on the basis of the relative bearing (34),
wherein the vehicle (2), when moving on this path, is monitored for a collision with obstacles (8, 10) in the surroundings using the first measurement signal (40) from the sensor circuit.

6. Method according to one of Claims 3 to 5, comprising:
- positioning the vehicle (2) in a region around the transmitting coil (20) on the basis of a global navigation satellite system, called GNSS, until the magnetic field (18) can be detected by the sensors (60, 64).

7. Control apparatus (52), configured to carry out a method according to one of Claims 3 to 6.

8. Vehicle (2), comprising:
- a chassis (44) supported on wheels (42),
- a sensor arrangement according to either of Claims 1 and 2 having at least three distance sensors arranged at spaced-apart sensor locations (28),
- an electrical store (14),
- a receiving coil (16) for charging the electrical store (14) using a magnetic field (18), and
- a control apparatus (52) according to Claim 7 for positioning the vehicle (2).

9. Vehicle (2) according to Claim 8,
wherein the sensors are arranged in the corner regions of the vehicle (2), in particular in the corner regions of the bumper of the vehicle (2).

## Revendications

1. Ensemble de capteurs comprenant une pluralité de capteurs de distance (60, 64) qui sont disposés dans un véhicule (2) à des emplacements distants les uns des autres et qui sont conçus pour délivrer un premier signal de mesure de distance (40, 62) qui dépend d'une distance à un obstacle (8, 10) situé à distance du véhicule (2), chaque capteur de distance (60, 64) comprenant :
- un circuit de détection comprenant un transducteur de mesure de distance (36, 74) destiné à générer le premier signal de mesure de distance (62, 40) sur la base de la distance, une sonde de champ magnétique (30) destinée à délivrer un deuxième signal de mesure (32) en fonction d'un champ magnétique (18) à détecter étant incorporée dans le capteur de distance, **caractérisé en ce que** le circuit de détection et la sonde de champ magnétique (30) sont logés conjointement dans un boîtier (73).

2. Ensemble de capteurs selon la revendication 1,
le boîtier du capteur de distance comprenant des matériaux non magnétiques, en particulier étant dépourvu de métal, en particulier comprenant une ou plusieurs matières synthétiques.

3. Procédé de positionnement d'un véhicule (2), dans lequel est disposé un ensemble de capteurs selon l'une des revendications précédentes, l'ensemble de capteurs comprenant au moins deux, de préférence au moins trois, capteurs de distance (60, 64) à des emplacements de capteur (28) distants les uns des autres, par l'intermédiaire d'une bobine d'émission (20) destinée à induire une tension de charge dans une bobine de réception (16) du véhicule (2) afin de charger un accumulateur d'énergie électrique (14) avec un champ magnétique (18), ledit procédé comprenant les étapes suivantes :
- détecter pour chaque emplacement de capteur (28) une intensité du champ magnétique (18) à l'aide du capteur respectif (60, 64) disposé à l'emplacement de capteur (28),
- déterminer une position relative (34) de la bobine d'émission (20) par rapport au véhicule (2) sur la base des intensités détectées du champ magnétique (18) aux emplacements de capteur (28), et
- déplacer le véhicule (2) sur la base de la position relative déterminée (34) jusqu'à ce que le véhicule (2) pourvu de la bobine d'émission (20) soit positionné au-dessus de la bobine de réception (16).

4. Procédé selon la revendication 3,
la position relative (34) de la bobine d'émission (20) par rapport au véhicule (2) étant déterminée sur la base d'une triangulation des intensités détectées du champ magnétique (18) aux emplacements de capteur (28).

5. Procédé selon la revendication 3 ou 4,
pour déplacer le véhicule (2) au-dessus de la bobine d'émission (20), le véhicule (2) étant déplacé sur une trajectoire déterminée sur la base de la position relative (34),
le véhicule (2) étant surveillé, lorsqu'il se déplace sur cette trajectoire, avec le premier signal de mesure (40) provenant du circuit de détection quant à une collision avec des obstacles (8, 10) situés dans l'environnement.

6. Procédé selon l'une des revendications 3 à 5, comprenant les étapes suivantes :
- positionner le véhicule (2) dans une zone située autour de la bobine d'émission (20) sur la base d'un système de navigation par satellite appelé GNSS jusqu'à ce que le champ magnétique (18) puisse être détecté avec les capteurs (60, 64).

7. Dispositif de commande (52) qui est conçu pour mettre en oeuvre un procédé selon l'une des revendications 3 à 6.

8. Véhicule (2) comprenant :
- un châssis (44) porté par des roues (42),
- un ensemble de capteurs selon l'une des revendications 1 ou 2, comportant au moins trois capteurs de distance qui sont disposés à des emplacements de capteur (28) distants les uns des autres,
un accumulateur électrique (14),
une bobine de réception (16) destinée à charger l'accumulateur électrique (14) avec un champ magnétique (18), et
- un dispositif de commande (52) selon la revendication 7 destiné à positionner le véhicule (2).

9. Véhicule (2) selon la revendication 8,
les capteurs étant disposés dans les zones d'angle du véhicule (2), en particulier dans les zones d'angle du pare-chocs du véhicule (2).
